# EUROPEAN PATENT APPLICATION

(11) **EP 2 311 544 A1**
(43) Date of publication of application: **20.04.2011**
(21) Application number: 09305941.8
(22) Date of filing: 05.10.2009
(51) Int. Cl.: B01D 53/04, B01D 53/14, C01B 3/00, C10K 1/00

(54) **Process and apparatus for the treatment of a synthesis gas**

(71) Applicant: L'Air Liquide Société Anonyme pour l'Etude et l'Exploitation des Procédés Georges Claude, 75007 Paris (FR); Lurgi Zimmer GmbH, 60295 Frankfurt am Main (DE)
(72) Inventor: Hernandez, Antoine, 94420, LE PLESSIS-TREVISE (FR); Meyer, Manfred, 60295, FRANKFURT/MAIN (DE); Victor, Marie-Pascal, 75018, PARIS (FR)
(74) Representative: Mercey, Fiona Susan

(57) **Abstract**

In a process for the purification and separation of a synthesis gas mixture containing carbon monoxide and/or hydrogen, a synthesis gas mixture is purified in an acid gas removal unit (3) including a nitrogen stripping column to form a purified synthesis gas mixture, at least part of the purified synthesis gas mixture is sent to an adsorption unit (7) to remove methanol and/or carbon dioxide and form a further purified synthesis gas mixture, at least part of the further purified synthesis gas mixture is separated at a cryogenic temperature to form at least an N₂/H₂ mixture or a product stream enriched in hydrogen and/or carbon monoxide, the adsorption unit is periodically regenerated using a gaseous nitrogen stream thereby producing a gaseous nitrogen stream containing methanol and/or carbon dioxide and at least part of the gaseous nitrogen stream containing methanol and/or carbon dioxide is sent to the nitrogen stripping column as a stripper gas.

## Description

The present invention relates to a process and an apparatus for the treatment of a synthesis gas containing CO and/or H₂.

More and more H₂ and/or CO plants are based on coal or heavy oil gasification.

Those plants are based mainly on two different steps:
1) production of synthesis gas (mixture of H₂, CO, CO₂, CH₄, N₂, H₂O, H₂S....mainly)
2) purification of synthesis gas. The purification is usually performed in two steps:
   - acid gas removal (for example by Rectisol ®)
   - cryogenic separation

Both purification steps require utilities consumption which is part of the operating costs of such plants. It can then be interesting to think about how to reduce such utilities consumption by interconnecting the two purification steps.

The acid gas removal section sends gaseous nitrogen to the base of a stripping column to remove CO₂ in the MeOH circulating stream as shown in "Cryogenics: principles and applications" by Springmann, Chemical Engineering, May, 1985.

The cryogenic separation step includes an adsorption process to remove any remaining impurities which would freeze in the cold box.

Most of the time, streams from the cold box are not suitable to be used as regeneration gas for the adsorption process.

The cryogenic separation section thus requires gaseous nitrogen from an outside source for the regeneration of the front end purification unit (adsorption) as described in US-A-7517390.

The total amount of gaseous nitrogen required by the overall purification of synthesis gas is consequently the sum of the amount required by the acid gas removal and that required by the cryogenic separation step.

The idea is to use the gaseous nitrogen from adsorption after regeneration for the acid gas removal stripping in order to reduce the total nitrogen consumption.

Nitrogen from an air separation unit or from a network is sent to the adsorption unit as regeneration gas. After regeneration, the nitrogen together with impurities from the regeneration, may be sent to an exchanger to keep a constant temperature and thence sent to the stripping column of the acid gas removal unit.

According to the present invention, there is provided a process for the purification and separation of a synthesis gas mixture containing carbon monoxide and/or hydrogen in which:
i) a synthesis gas mixture is purified in an acid gas removal unit including a nitrogen stripping column to form a purified synthesis gas mixture containing methanol and/or carbon dioxide
ii) at least part of the purified synthesis gas mixture is sent to an adsorption unit to remove methanol and/or carbon dioxide and form a further purified synthesis gas mixture
iii) at least part of the further purified synthesis gas mixture is separated at a cryogenic temperature to form at least a N2/H2 mixture to feed an ammonia synthesis unit or a product stream enriched in hydrogen and/or carbon monoxide
iv) the adsorption unit is periodically regenerated using a gaseous nitrogen stream thereby producing a gaseous nitrogen stream containing methanol and/or carbon dioxide and
v) at least part of the gaseous nitrogen stream containing methanol and/or carbon dioxide is sent to the nitrogen stripping column as a stripper gas.

Optionally:
- the gaseous nitrogen stream containing methanol and/or carbon dioxide is maintained at a constant temperature by heating and/or cooling between the adsorption unit and the stripping column;
- the constant temperature is chosen to be between 30°C and 60°C.

According to another aspect of the invention, there is provided an apparatus for purification and separation of a synthesis gas mixture containing carbon monoxide and/or hydrogen including an acid gas removal unit including a nitrogen stripping column, an adsorption unit, a cryogenic separation unit, means for sending a synthesis gas mixture to be purified in the acid gas removal unit to form a purified synthesis gas mixture containing methanol and/or carbon dioxide, means for sending at least part of the purified synthesis gas mixture to the adsorption unit to remove methanol and/or carbon dioxide and form a further purified synthesis gas mixture, means for sending at least part of the further purified synthesis gas mixture to the cryogenic separation unit to form at least a N₂/H₂ mixture to feed an ammonia synthesis unit or a product stream enriched in hydrogen and/or carbon monoxide, means for sending a gaseous nitrogen stream to the adsorption unit to periodically regenerate the adsorption unit thereby producing a gaseous nitrogen stream containing methanol and/or carbon dioxide and means for sending at least part of the gaseous nitrogen stream containing methanol and/or carbon dioxide to the nitrogen stripping column as a stripper gas.

Optionally the apparatus includes a heat exchanger for warming and/or cooling the gaseous nitrogen stream containing methanol and/or carbon dioxide downstream of the adsorption unit and upstream of the stripping column.

The heat exchanger may be constituted by at least one tube and comprise means for passing the gaseous nitrogen stream containing methanol and/or carbon dioxide into the at least one tube, the at least one tube being submerged in a bath of water.

Means may be provided for heating the heat exchanger by injecting steam into the bath of water.

The apparatus may comprise means for sending the nitrogen containing methanol and/or carbon dioxide to the bottom of the stripping column and means for sending a liquid derived from the synthesis gas mixture to a higher point of the stripping column.

The apparatus may comprise means for sending at least part of the purified synthesis gas mixture to the adsorption unit to remove methanol and form the further purified synthesis gas mixture, means for sending at least part of the further purified synthesis gas mixture to the cryogenic separation unit to form at least an N₂/H₂ mixture to feed the ammonia synthesis unit, means for sending the gaseous nitrogen stream to the adsorption unit to regenerate the adsorption unit periodically thereby producing a gaseous nitrogen stream containing methanol and means for sending at least part of the gaseous nitrogen stream containing methanol to the nitrogen stripping column as the stripper gas.

The apparatus may comprise means for sending at least part of the purified synthesis gas mixture to the adsorption unit to remove carbon dioxide and form the further purified synthesis gas mixture, means for sending at least part of the further purified synthesis gas mixture to the cryogenic distillation unit to form a product stream enriched in hydrogen and/or carbon monoxide, means for sending the gaseous nitrogen stream to the adsorption unit to regenerate the adsorption unit periodically thereby producing the gaseous nitrogen stream containing carbon dioxide, means for sending at least part of the gaseous nitrogen stream containing carbon dioxide to the nitrogen stripping column as the stripper gas.

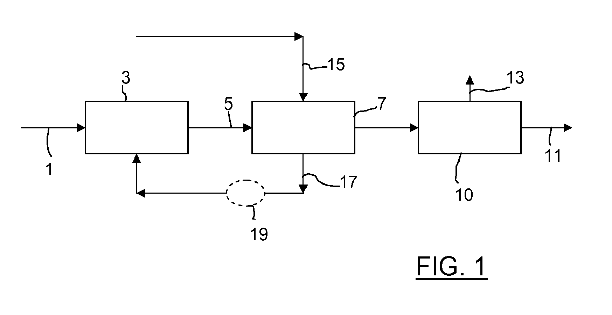

The invention will be described in greater detail by referring to the figure which shows a synthesis gas purification and separation apparatus according to the invention.

A synthesis gas 1 is sent to an acid gas removal unit, preferably of the Rectisol ® type, comprising a nitrogen stripping column. The acid removal unit 3 produces a purified synthesis gas 5 which is further purified to remove methanol and/ or carbon dioxide in an adsorption unit 7. The further purified synthesis gas 9 is sent to a cryogenic separation unit 10 which may be a distillation unit where the further purified synthesis gas is to be separated into a carbon monoxide product 13 and a hydrogen product 11. The cryogenic separation unit 10 may alternatively or additionally include a wash column for washing the synthesis gas or a gas derived from the synthesis gas with liquid nitrogen to produce an N₂/H₂ synthesis gas mixture 11 for feeding an ammonia plant.

The adsorption unit 7 is periodically regenerated using a gaseous nitrogen stream 15 from an air separation unit (not shown). The gaseous nitrogen used for the regeneration is removed enriched with methanol and/or carbon dioxide from the regeneration and its temperature is preferably maintained constant using an exchanger 19 before being sent to the stripping column of the acid gas removal unit 3.

The exchanger 19 may take the form of a cooling pool in which the gaseous nitrogen from the regeneration is sent through tubes submerged in a bath of hot water. This bath may be within a storage tank or else may be a pool with concrete walls and a cover. The bath is maintained at a temperature around 30-60°C by injection of steam.

## Claims

1. Process for the purification and separation of a synthesis gas mixture (1) containing carbon monoxide and/or hydrogen in which:
i) a synthesis gas mixture is purified in an acid gas removal unit (3) including a nitrogen stripping column to form a purified synthesis gas mixture containing methanol and/or carbon dioxide
ii) at least part of the purified synthesis gas mixture is sent to an adsorption unit (7) to remove methanol and/or carbon dioxide and form a further purified synthesis gas mixture
iii) at least part of the further purified synthesis gas mixture is separated at a cryogenic temperature to form at least a N₂/H₂ mixture (11) to feed an ammonia synthesis unit or a product stream enriched in hydrogen and/or carbon monoxide (11, 13)
iv) the adsorption unit is periodically regenerated using a gaseous nitrogen stream thereby producing a gaseous nitrogen stream (17) containing methanol and/or carbon dioxide and
v) at least part of the gaseous nitrogen stream containing methanol and/or carbon dioxide is sent to the nitrogen stripping column as a stripper gas.

2. Process according to Claim 1 wherein the gaseous nitrogen stream containing methanol and/or carbon dioxide (17) is maintained at a constant temperature by heating and/or cooling between the adsorption unit and the stripping column.

3. Process according to Claim 2 wherein the constant temperature is chosen to be between 30°C and 60°C.

4. Apparatus for purification and separation of a synthesis gas mixture containing carbon monoxide and/or hydrogen including an acid gas removal unit (3) including a nitrogen stripping column, an adsorption unit (7), a cryogenic separation unit (10), for example a distillation unit, means for sending a synthesis gas mixture to be purified in the acid gas removal unit to form a purified synthesis gas mixture containing methanol and/or carbon dioxide, means for sending at least part of the purified synthesis gas mixture to the adsorption unit to remove methanol and/or carbon dioxide and form a further purified synthesis gas mixture, means for sending at least part of the further purified synthesis gas mixture to the cryogenic separation unit to form at least an N₂/H₂ mixture to feed an ammonia synthesis unit or a product stream enriched in hydrogen and/or carbon monoxide, means for sending a gaseous nitrogen stream to the adsorption unit to periodically regenerate the adsorption unit thereby producing a gaseous nitrogen stream containing methanol and/or carbon dioxide and means for sending at least part of the gaseous nitrogen stream containing methanol and/or carbon dioxide to the nitrogen stripping column as a stripper gas.

5. Apparatus according to Claim 4 including a heat exchanger (19) for warming and/or cooling the gaseous nitrogen stream containing methanol and/or carbon dioxide downstream of the adsorption unit (7) and upstream of the stripping column.

6. Apparatus according to Claim 5 wherein the heat exchanger (19) is constituted by at least one tube and comprising means for passing the gaseous nitrogen stream containing methanol and/or carbon dioxide into the at least one tube, the at least one tube being submerged in a bath of water.

7. Apparatus according to Claim 6 comprising means for heating the heat exchanger (19) by injecting steam into the bath of water.

8. Apparatus according to one of Claims 5 to 7 including means for sending the nitrogen containing methanol and/or carbon dioxide to the bottom of the stripping column and means for sending a liquid derived from the synthesis gas mixture to a higher point of the stripping column.

9. Apparatus to any of Claims 5 to 8 comprising means for sending at least part of the purified synthesis gas mixture to the adsorption unit (7) to remove methanol and form the further purified synthesis gas mixture, means for sending at least part of the further purified synthesis gas mixture to the cryogenic separation unit (10) to form at least the N₂/H₂ mixture to feed the ammonia synthesis unit, means for sending the gaseous nitrogen stream to the adsorption unit (7) to regenerate the adsorption unit periodically thereby producing a gaseous nitrogen stream containing methanol (17) and means for sending at least part of the gaseous nitrogen stream containing methanol to the nitrogen stripping column as the stripper gas.

10. Apparatus according to at least one of Claim 5 to 9 comprising means for sending at least part of the purified synthesis gas mixture to the adsorption unit (7) to remove carbon dioxide and form the further purified synthesis gas mixture, means for sending at least part of the further purified synthesis gas mixture to the cryogenic separation unit (10) to form the product stream enriched in hydrogen and/or carbon monoxide, means for sending a gaseous nitrogen stream to the adsorption unit to regenerate the adsorption unit periodically thereby producing the gaseous nitrogen stream containing carbon dioxide and means for sending at least part of the gaseous nitrogen stream containing carbon dioxide to the nitrogen stripping column as the stripper gas.
